# DEMANDE DE BREVET EUROPEEN

(11) **EP 4 568 046 A1**
(43) Date de publication de la demande: **11.06.2025**
(21) Numéro de dépôt: 24217654.3
(22) Date de dépôt: 05.12.2024
(51) Int. Cl.: H02J 3/00, G06Q 10/04, G06Q 50/06, H02J 3/14, H02J 13/00

(54) **MÉTHODES ET DISPOSITIFS DE GESTION DE DÉLESTAGE DANS UN RÉSEAU DE DISTRIBUTION D'UNE RESSOURCE**

(30) Priorité: 07.12.2023 FR 2313719; 07.12.2023 FR 2313720; 14.02.2024 FR 2401442
(71) Demandeur: SAGEMCOM ENERGY & TELECOM SAS, 92270 Bois-Colombes (FR)
(72) Inventeur: TEBOULLE, Henri, 92270 Bois-Colombes (FR)
(74) Mandataire: Novagraaf Technologies

(57) **Abrégé**

Un délestage est mis en oeuvre dans un réseau de distribution d'une ressource afin d'éviter les surconsommations. Le réseau comporte au moins une tête de réseau et une pluralité de compteurs configurés pour mesurer une consommation de ladite ressource par un client et pour transmettre à la tête de réseau des informations client représentatives de la consommation du client sur une plage de temps déterminée. Une consommation prévisionnelle globale est déterminée, à partir des informations client transmises par les compteurs, pour l'ensemble des compteurs pour la plage de temps déterminée. Une ou plusieurs périodes de délestage sont déterminées, en comparant la consommation prévisionnelle globale à un seuil global prédéfini. Pour chacune, les compteurs à délester sont sélectionnés en fonction des gains de délestage attendus pour les compteurs considérés. Et une commande de délestage leur est envoyée qui concerne une ou plusieurs occurrences futures de la plage de temps déterminée.

## Description

### DOMAINE TECHNIQUE

Les différents exemples de réalisation décrits dans la présente divulgation concernent le délestage dans un réseau de distribution d'une ressource, par exemple un réseau de distribution d'électricité, de gaz, d'eau, de chaleur, etc... afin de contrôler la demande et d'éviter les surconsommations pouvant entraîner un écroulement du réseau de distribution.

### ARRIERE PLAN

Il est connu d'appliquer un délestage dans un réseau électrique lorsqu'un événement entraînant une insuffisance de génération d'énergie dans le réseau est détecté.

Il existe un besoin pour une méthode de gestion de délestage dans un réseau de distribution qui réponde aux variations de la demande.

### RESUME

Selon un premier aspect, une méthode de gestion de délestage est décrite, qui est destinée à être utilisée dans un réseau de distribution d'une ressource comportant au moins une tête de réseau et une pluralité de compteurs et dans laquelle les compteurs sont configurés pour mesurer une consommation de ladite ressource par un client, transmettre à la tête de réseau des informations représentatives de la consommation du client, recevoir une commande de délestage en provenance de la tête de réseau et appliquer un délestage en fonction de ladite commande. La méthode comporte en outre des étapes pour déterminer, à partir des informations représentatives de la consommation des clients, une consommation prévisionnelle globale sur une plage de temps pour l'ensemble des compteurs ; déterminer une ou plusieurs périodes de délestage pour ladite plage de temps, en comparant la consommation prévisionnelle globale à un seuil global prédéfini ; estimer un gain de délestage pour au moins une partie des compteurs, sélectionner un ou plusieurs compteurs à délester pour obtenir un gain cible permettant de compenser un écart entre un maximum de la consommation prévisionnelle globale sur la période de délestage et le seuil global prédéfini, en tenant compte des gains de délestage estimés ; envoyer une commande de délestage aux compteurs sélectionnés, ladite commande concernant une ou plusieurs occurrences futures de ladite plage de temps et spécifiant une ou plusieurs périodes de délestage pour ladite plage de temps.

Dans un mode de réalisation de la méthode de gestion de délestage, le gain de délestage est estimé pour les compteurs pour lesquels la consommation client est supérieure à un seuil de consommation ou pour un pourcentage de compteurs pour lesquels la consommation client est la plus forte.

Dans un mode de réalisation de la méthode de gestion de délestage, le gain de délestage d'un compteur donné est estimé en comparant des informations représentatives de la consommation du client sans délestage à des informations, apprises pendant une phase d'apprentissage, représentatives de la consommation du client avec délestage.

Par exemple, durant la phase d'apprentissage, pour chaque plage de temps considérée, une commande de délestage est envoyée à chaque compteur par tranches de temps, afin d'obtenir des informations représentatives de la consommation du client avec délestage, pour chaque tranche de temps de chaque plage de temps, les périodes de délestage étant calées sur lesdites tranches de temps.

Dans un mode de réalisation de la méthode de gestion de délestage, par exemple dans le cas d'un réseau de distribution de gaz, le délestage consiste à interrompre totalement la distribution de la ressource au niveau d'un ou plusieurs compteurs, et le gain de délestage estimé pour un compteur donné est égal à la consommation du client sans délestage.

Dans un autre mode de réalisation de la méthode de gestion de délestage, par exemple dans le cas d'un réseau de distribution d'eau, le délestage consiste à appliquer un débit maximum réduit au niveau d'un ou plusieurs compteurs et, pour un compteur donné, le gain de délestage estimé est égal à la différence entre la consommation du client sans délestage et la consommation possible avec le débit maximum réduit.

Dans un mode de réalisation de la méthode de gestion de délestage, la sélection des compteurs à délester comporte une sélection aléatoire parmi les compteurs pour lesquels le gain de délestage a été estimé, d'un nombre de compteurs nécessaire pour obtenir le gain cible.

Dans un mode de réalisation de la méthode de gestion de délestage, la sélection des compteurs à délester comporte une première sélection d'un premier nombre de compteurs supérieur au nombre de compteurs nécessaire pour obtenir le gain cible, et une seconde sélection aléatoire parmi les compteurs de la première sélection, d'un deuxième nombre de compteurs, inférieur au premier nombre, nécessaire pour obtenir le gain cible.

Dans un mode de réalisation de la méthode de gestion de délestage, la sélection des compteurs à délester comporte une première sélection parmi les compteurs pris par ordre de gain de délestage décroissant, d'un premier, second, et troisième groupe comportant respectivement Q1, Q2 et Q3 compteurs, la somme des gains de délestage des Q1+Q2 compteurs du premier et du second groupe permettant d'atteindre le gain cible, et la somme des gains de délestage des Q2+Q3 compteurs du second et du troisième groupe permettant d'atteindre le gain cible ; et une seconde sélection aléatoire parmi les Q1+Q2+Q3 compteurs de Q2+Q3 compteurs à délester.

Dans un mode de réalisation de la méthode de gestion de délestage, la commande de délestage comporte un nombre de périodes de délestage pour ladite plage de temps et un identifiant de chaque période de délestage.

Dans un mode de réalisation de la méthode de gestion de délestage, la commande de délestage comporte un nombre de périodes de délestage pour ladite plage de temps, un identifiant de chaque période de délestage, et une indication de la réduction de débit à appliquer.

Dans un mode de réalisation de la méthode de gestion de délestage, seules sont prise en compte, pour la détermination de la consommation prévisionnelle globale, les informations représentatives de la consommation du client sans délestage.

Selon un second aspect, un dispositif tête de réseau est décrit, qui comporte des moyens pour la mise en oeuvre d'une méthode de gestion de délestage dans un réseau de distribution tel que décrit dans le présent document.

Selon un troisième aspect, une méthode de délestage est décrite qui est destinée à être mise en oeuvre par un compteur appartenant à un réseau de distribution d'une ressource, le compteur étant configuré pour mesurer une consommation de ladite ressource par un client et pour transmettre à une tête de réseau du réseau de distribution des informations client représentatives de la consommation du client sur une plage de temps déterminée. La méthode de délestage comporte une étape de réception d'une commande de délestage provenant de la tête de réseau, la commande de délestage spécifiant une ou plusieurs périodes de délestage à mettre en oeuvre pendant une ou plusieurs occurrences futures de la plage de temps déterminée.

Dans un mode de réalisation de la méthode de délestage, la commande de délestage comporte un nombre de périodes de délestage pour ladite plage de temps et un identifiant de chaque période de délestage.

Dans un mode de réalisation de la méthode de délestage, la commande de délestage comporte en outre une indication de réduction de débit à appliquer au niveau du compteur.

Dans un mode de réalisation de la méthode de délestage, le délestage est déclenché et/ou terminé à un instant aléatoire par rapport aux périodes de délestage spécifiées dans la commande de délestage.

Selon un quatrième aspect, un dispositif compteur est décrit qui comporte des moyens de mise en oeuvre d'une méthode de délestage tel que décrite dans le présent document.

Selon un cinquième aspect, un produit programme d'ordinateur est décrit qui comporte des instructions qui lorsqu'elles sont exécutées par au moins un processeur causent la mise en oeuvre d'une méthode de gestion de délestage telle que décrite dans le présent document.

Selon un sixième aspect, un produit programme d'ordinateur est décrit qui comporte des instructions qui lorsqu'elles sont exécutées par au moins un processeur causent la mise en oeuvre d'une méthode de délestage telle que décrite dans le présent document.

Selon un autre aspect un support de stockage non transitoire lisible par un ordinateur est décrit, qui comporte des instructions qui lorsqu'elles sont exécutées par un processeur causent la mise en oeuvre d'une méthode de gestion de délestage telle que décrite dans le présent document.

Selon un autre aspect, un support de stockage non transitoire lisible par un ordinateur est décrit, qui comporte des instructions qui lorsqu'elles sont exécutées par un processeur causent la mise en oeuvre d'une méthode de délestage telle que décrite dans le présent document.

Les dispositifs tête de réseau et compteur peuvent être constitués par des moyens logiciels, c'est-à-dire des instructions destinées à être exécutées par un ensemble de circuits pour effectuer une ou plusieurs ou toutes les opérations ou étapes à réaliser par la tête de réseau et/ou le compteur, en application des méthodes décrites dans le présent document. L'ensemble de circuits peut être constitué par une circuiterie dédiée. Il peut aussi être constitué à partir d'un ou plusieurs processeurs et d'une ou plusieurs mémoires comprenant un ou plusieurs codes de programme informatique, lesdits processeurs, mémoires et codes informatiques étant configurés pour amener la tête de réseau et/ou le compteur à exécuter une ou plusieurs ou toutes les étapes des méthodes décrites dans le présent document.

Selon un autre aspect, un système de gestion de compteur d'un réseau de distribution d'une ressource est décrit. Ce système comporte au moins un dispositif tête de réseau et au moins un dispositif compteur tels que décrits dans le présent document..

### BREVE DESCRIPTION DES FIGURES

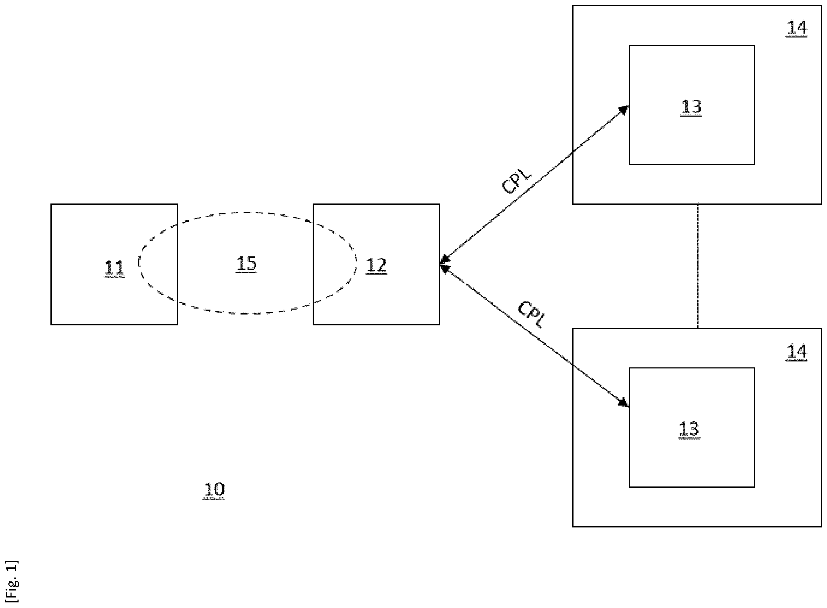

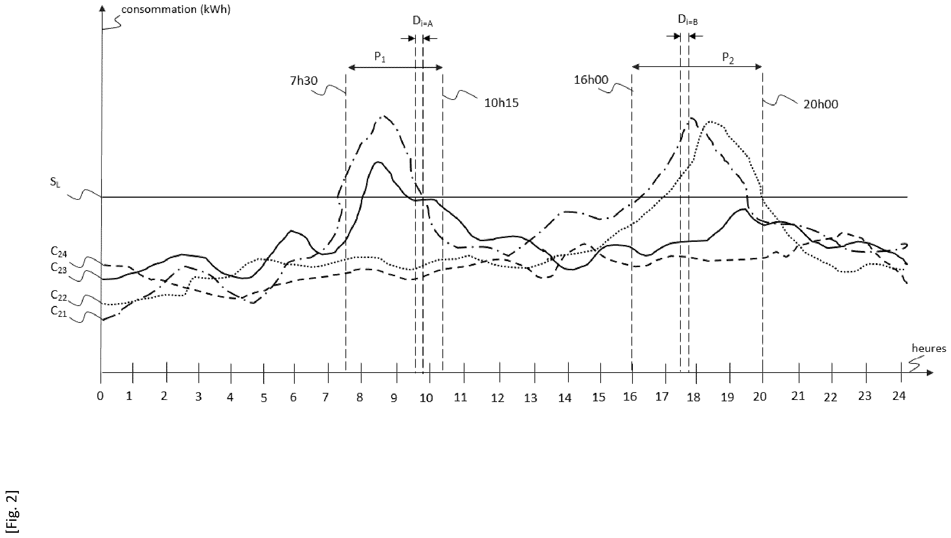

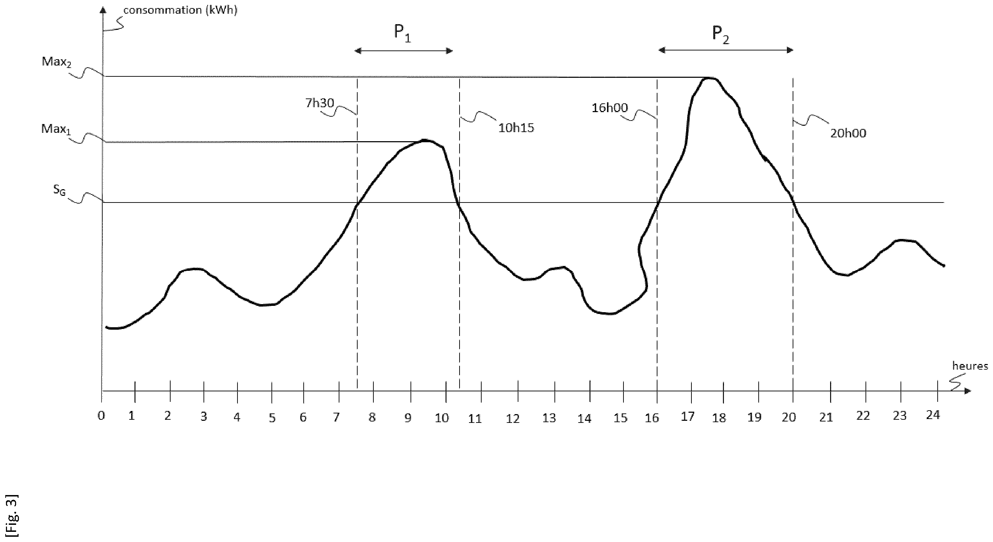

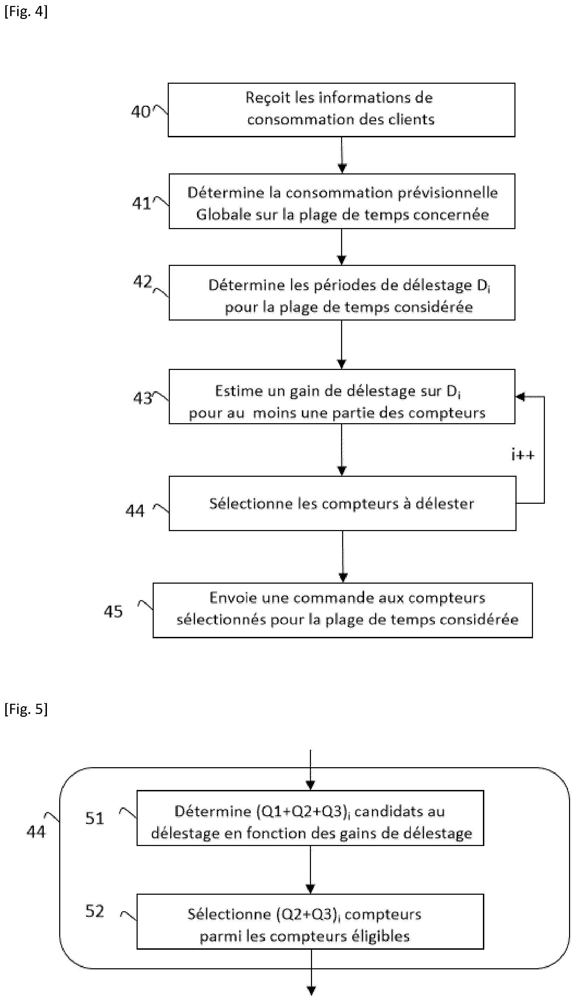

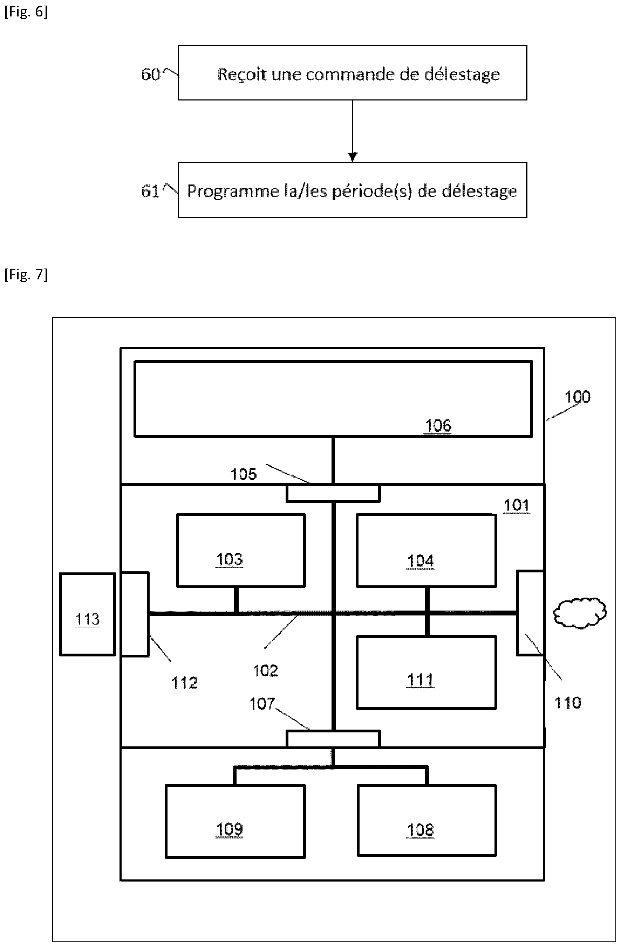

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure FIG.1 est un schéma d'un exemple de système de gestion de compteurs d'un réseau de distribution d'une ressource.
La figure FIG.2 représente plusieurs courbes de charge de clients sur une plage de temps déterminée.
La figure FIG.3 représente une courbe prévisionnelle globale sur la même plage de temps déterminée.
La figure FIG.4 est un diagramme décrivant les étapes d'une méthode de gestion de délestage destinée à être implémentée dans une tête de réseau d'un réseau de distribution.
La figure FIG.5 décrit une mise en oeuvre particulière de l'étape de sélection des compteurs à délester dans un mode de réalisation.
La figure FIG.6 est un diagramme décrivant les étapes d'une méthode de délestage destinée à être implémentée dans un compteur d'un réseau de distribution.
La figure FIG.7 est un schéma blocs d'un dispositif de mise en oeuvre d'une tête de réseau ou d'un compteur selon la présente divulgation.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en oeuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

La présente divulgation s'applique à tout réseau de distribution d'une ressource comportant au moins une tête de réseau et une pluralité de compteurs mesurant la consommation de ladite ressource. Il peut s'agir par exemple d'un réseau de distribution d'électricité, de gaz, d'eau, de chaleur, etc... Certains modes de réalisation sont optimisés pour la distribution d'une ressource particulière, sans que ce soit exclusif d'autres ressources.

Dans l'exemple non limitatif de la FIG.1, un système 10 de gestion de compteurs d'un réseau de distribution comporte au moins une tête de réseau 11 qui est prévue pour communiquer via un sous-répartiteur 12 avec une pluralité de compteurs 13 qui sont installés chez des clients 14. Par exemple, la tête de réseau 11 communique avec le sous-répartiteur 12 via un réseau de télécommunication sans fil 15. Le réseau de communication sans fil 15 peut être un réseau GPRS, UMTS, LTE, 5G, ou un réseau à bande étroite loT (de l'anglais Internet-of-Things). Par exemple le sous-répartiteur 12 communique avec les compteurs 13 via le réseau électrique par courant porteur en ligne (CPL).

Un compteur 13 installé chez un client 14 est configuré pour mesurer une consommation par le client 14, de la ressource qui est distribuée via le réseau de distribution. Par exemple, lorsque le réseau est un réseau de distribution d'électricité, de gaz ou d'eau, le compteur 13 mesure la consommation d'électricité, de gaz ou d'eau du client 14.

Les compteurs 13 sont en outre configurés pour transmettre à la tête de réseau 11 des informations client représentatives de la consommation du client 14 sur une plage de temps déterminée. Par exemple les compteurs 13 transmettent tous les jours des informations représentatives de la consommation journalière. Ces informations client comportent par exemple une valeur de consommation par tranche de temps d'une durée déterminée, par exemple toutes les 15mn. Les valeurs transmises pour chaque tranche de temps de 15mn dans la journée permettent d'établir une courbe de charge pour le client pour la journée.

La tête de réseau 11 est quant à elle configurée pour transmettre des commandes de délestage à un ou plusieurs compteurs 13.

Les compteurs 13 sont configurés pour réaliser des délestages, conformément aux commandes de délestage qu'ils reçoivent de la tête de réseau 11. Par exemple, dans un réseau de distribution d'électricité, un compteur 13 peut réaliser un délestage en déconnectant un ou plusieurs éléments consommateur d'électricité chez un client 14, par exemple un ballon d'eau chaude et/ou un ou plusieurs radiateurs. Un tel délestage permet de réduire la consommation et ainsi d'éviter un risque d'écroulement du réseau de distribution. Par exemple, dans un réseau de distribution de gaz, le délestage peut être réalisé en interrompant totalement la distribution du gaz pendant la période de délestage. Par exemple dans un réseau de distribution d'eau, le délestage peut être réalisé en réduisant le débit maximum d'eau qui peut être consommé par le client pendant la période de délestage.

Par exemple, l'échange de données entre les compteurs 13 et la tête de réseau 11 se fait par trames de données conformes au protocole DLMS/COSEM.

Dans les modes de réalisation qui vont être décrits ci-dessous à titre d'exemple, une plage de temps déterminée correspond à un jour spécifique de la semaine (c'est-à-dire le dimanche, le lundi, etc...). La tête de réseau 11 stocke alors les informations client pour chacun des jours de la semaine pris séparément. Ce mode de réalisation permet de tenir compte des différences de profils de consommation en fonction du jour de la semaine.

D'autres modes de réalisation sont possibles, utilisant d'autre plages de temps déterminées. Par exemple, une plage de temps déterminée peut correspondre à un jour ouvré quelconque ou un jour non-ouvré quelconque. Dans ce cas, la tête de réseau 11 stocke d'une part les informations client pour les jours ouvrés et d'autre part les informations client pour les jours non-ouvrés. Dans un autre exemple, la plage de temps déterminée correspond à une semaine ou à un mois spécifique de l'année. Dans ce cas, la tête de réseau 11 stocke les informations client pour chaque semaine ou pour chaque mois de l'année pris séparément. Dans cet exemple, il est possible de tenir compte des différences de profils de consommation en fonction des semaines de congés ou des saisons de l'année.

La FIG.2 représente les courbes de charge de quatre clients C₂₁, C₂₂, C₂₃ et C₂₄ sur une plage de temps déterminée, qui dans cet exemple correspond à un jour donné de la semaine (jour J). Dans cet exemple, on fait l'hypothèse que le jour J pour lequel les informations clients ont été collectées est un jour sans délestage pour les clients C₂₁ à C₂₄.

La FIG.3 représente une courbe prévisionnelle représentant la consommation prévisionnelle globale, obtenue pour la même plage de temps, c'est-à-dire pour le jour J, à partir des courbes de charge des quatre clients de la FIG.2.

Sur la FIG.3, on a représenté un seuil S_{G}, dit seuil global prédéfini, qui correspond à un maximum de consommation théorique pour l'ensemble des clients C₂₁ à C₂₄. On observe sur la FIG.3 que le seuil global prédéfini S_{G} est dépassé pendant deux périodes, dites période de surconsommation, P₁ comprise entre 7h30 et 10h15 et P₂ comprise entre 16h00 et 20h00. La consommation maximum pendant la période de surconsommation P₁ est notée Max₁ et la consommation maximum pendant la période de surconsommation P₂ est notée Max₂.

Chaque période de surconsommation peut donner lieu à une ou plusieurs périodes de délestage. Par exemple une période de surconsommation peut constituer une seule période de délestage ou peut correspondre à une pluralité de périodes de délestage.

La FIG.4 est un organigramme représentant les principales étapes d'une méthode de gestion de délestage destinée à être mise en oeuvre par la tête de réseau 11. A l'étape 40, la tête de réseau 11 reçoit en provenance d'une pluralité de compteurs 13 du réseau de distribution 11 des informations client représentatives de la consommation du client sur une plage de temps déterminée (par exemple un jour J de la semaine). A l'étape 41, la tête de réseau 11 détermine, à partir des informations représentatives de la consommation des clients, une consommation prévisionnelle globale sur la plage de temps pour l'ensemble des compteurs. A l'étape 42, la tête de réseau 11 détermine une ou plusieurs périodes de délestage Dᵢ à partir des informations client reçues. A l'étape 43, la tête de réseau 11 estime un gain de délestage sur Dᵢ pour au moins une partie des compteurs 13. A l'étape 44, la tête de réseau 11 sélectionne les compteurs à délester en tenant compte des gains de délestage obtenus à l'étape précédente. A l'étape 45, la tête de réseau 11 envoie une commande de délestage aux compteurs sélectionnés concernant une ou plusieurs occurrences futures de la plage de temps déterminée (par exemple pour le jour J de la semaine suivante).

Le gain de délestage peut être estimé pour tout ou partie des compteurs 13 commandés par la tête de réseau 11. Dans la suite de la description, les compteurs pour lesquels le gain de délestage est estimé sont appelés compteurs éligibles au délestage.

Par exemple, les compteurs éligibles sont constitués par un pourcentage donné de compteurs dont la consommation sans délestage est la plus forte (par exemple les 50% ou 75% de compteurs des clients ayant la plus forte consommation, d'après les informations de consommation reçues par la tête de réseau 11).

Dans un autre exemple, les compteurs éligibles sont ceux pour lesquels la consommation client est supérieure à un seuil de consommation donné. Ce seuil de consommation peut être un maximum théorique (dans le cas d'un compteur d'électricité par exemple) ou peut correspondre à un maximum de consommation possible lorsque le compteur applique une commande de délestage (dans le cas d'un compteur d'eau par exemple). Sur la FIG.2, on a représenté un exemple de seuil de consommation noté S_{L}. Les périodes de surconsommation P₁ et P₂ de la FIG.3 sont reportées sur la FIG.2. On observe ainsi que les clients qui dépassent le seuil de consommation S_{L} pendant la période de surconsommation P₁ sont les clients C₂₁ et C₂₃. Et les clients qui dépassent le seuil de consommation S_{L} pendant la période de surconsommation P₂ sont les clients C₂₁ et C₂₂. Autrement dit dans cet exemple : le client C₂₁ est éligible pendant les deux périodes de surconsommation P₁ et P₂ ; le client C₂₂ est éligible pendant la période de surconsommation P₂ ; le client C₂₃ est éligible pendant la période de surconsommation P₁ ; et le client C₂₄ n'est pas éligible.

A l'étape 43, le gain de délestage est estimé pour les compteurs éligibles au délestage. Il peut l'être de différentes façons. Par exemple, l'estimation du gain de délestage peut varier selon le type de ressource distribuée.

Dans un premier exemple de réalisation, la ressource distribuée est du gaz. Dans ce cas, le délestage peut être réalisé en interrompant totalement la distribution du gaz pour certains clients. Le gain de délestage estimé pour un compteur donné est alors égal à la consommation du client lorsqu'aucun délestage n'est appliqué.

Dans un deuxième exemple de réalisation, la ressource distribuée est de l'eau, et le délestage peut être réalisé en appliquant un débit maximum réduit au niveau d'un ou plusieurs compteurs. Dans ce cas, le gain de délestage estimé pour un compteur donné est égal à la différence entre la consommation du client sans délestage et la consommation possible avec le débit maximum réduit.

Dans un troisième exemple, la ressource distribuée est de l'électricité. Dans ce cas, le délestage peut être réalisé en déconnectant un ou plusieurs éléments consommateur d'électricité chez le client. La tête de réseau peut alors apprendre l'impact du délestage pour chaque compteur pendant une phase d'apprentissage et estimer le gain de délestage à partir d'informations apprises. Cet apprentissage est indépendant des besoins de délestage. Il peut se faire une fois ou régulièrement, par exemple tous les ans, une fois en été et une fois en hiver. L'apprentissage se fait sur des données réelles. Par exemple, durant la phase d'apprentissage, pour chaque plage de temps considérée, une commande de délestage est envoyée à chaque compteur par tranches de temps, afin d'obtenir des informations représentatives de la consommation du client avec délestage pour chaque tranche de temps de chaque plage de temps. Par exemple, lorsque la plage de temps considérée correspond à un jour spécifique de la semaine, une commande de délestage est envoyée à tous les compteurs toutes les 15mn pour chaque jour spécifique de la semaine afin d'apprendre la réponse des compteurs aux commandes de délestage. Par exemple lorsque la plage de temps considérée est une journée, elle peut être découpée en 96 tranches de temps de 15mn chacune.

A l'étape 44, la tête de réseau sélectionne les compteurs à délester pour obtenir un gain cible permettant de compenser l'écart entre le maximum de la consommation prévisionnelle globale sur la période de délestage et le seuil global prédéfini, en tenant compte des gains de délestage estimés à l'étape 43.

Par exemple, la tête de réseau sélectionne les compteurs à délester pour obtenir le gain cible en considérant les gains de délestage des compteurs éligibles pris par ordre de gain de délestage décroissant. Par exemple, la tête de réseau additionne les gains de délestage des compteurs dans le sens décroissant jusqu'à atteindre le gain cible et sélectionne les compteurs correspondant pour le délestage. Ce mode de réalisation permet de cibler les clients pour lesquels le délestage aura le plus fort impact.

Dans un autre exemple, la tête de réseau sélectionne les compteurs à délester pour obtenir le gain cible en considérant les gains de délestage des compteurs éligibles pris aléatoirement. Par exemple, la tête de réseau additionne les gains de délestage de compteurs choisis aléatoirement jusqu'à atteindre le gain cible et sélectionne les compteurs correspondant pour le délestage. Ce mode de réalisation permet d'éviter d'impacter toujours les mêmes clients.

Dans un autre exemple, la tête de réseau réalise une première sélection, à partir des gains de délestage des compteurs éligibles, d'un nombre de compteurs supérieur au nombre de compteurs nécessaire pour obtenir le gain cible, puis effectue une seconde sélection, parmi les compteurs de la première sélection, pour atteindre le gain cible. La seconde sélection est par exemple aléatoire. Ce mode de réalisation permet de cibler les clients pour lesquels le délestage aura le plus fort impact tout en évitant de toujours sélectionner les mêmes clients.

Les sélection décrites ci-dessus comme aléatoires peuvent intégrer d'autres paramètres comme par exemple le type d'abonnement du client, ou l'historique des délestages appliqués au client.

Lorsque les compteurs sont des compteurs de gaz, le délestage se fait en interrompant totalement la distribution. Il est possible de considérer que tous les compteurs sont éligibles et de sélectionner les compteurs aléatoirement en additionnant leur gain de délestage jusqu'à atteindre le gain cible.

Lorsque les compteurs sont des compteurs d'eau, avantageusement seule une partie des compteurs est considérée comme éligible. Par exemple, les compteurs éligibles sont constitués par les 75% de compteurs qui ont la consommation la plus élevée, ou par les compteurs dont la consommation est supérieure à la consommation possible avec délestage (c'est-à-dire lorsque le débit est réduit). Autrement dit, on ne considère que les compteurs dont la consommation est suffisamment importante pour que le délestage ait un impact significatif. Puis la sélection parmi les compteurs éligibles peut se faire aléatoirement comme décrit plus haut dans le cas du gaz.

La FIG.5 décrit un exemple de réalisation de l'étape de sélection 44 particulièrement adapté au cas des compteurs d'électricité. Dans cet exemple, l'étape 44 se décompose en deux étapes 51 et 52. A l'étape 51, la tête de réseau 11 détermine parmi les compteurs éligibles pris par ordre de gain de délestage décroissant, un premier, un deuxième, et un troisième groupe de compteurs comportant respectivement Q1, Q2 et Q3 compteurs éligibles, tels que la somme des gains de délestage des Q1+Q2 compteurs du premier et du deuxième groupe permette d'atteindre le gain cible, et que la somme des gains de délestage des Q2+Q3 compteurs du deuxième et du troisième groupe permette d'atteindre le gain cible. A l'étape 52, une sélection de Q2+Q3 compteurs à délester est ensuite réalisée parmi les Q1+Q2+Q3 compteurs déterminés à l'étape 51, par exemple aléatoirement. Par exemple les Q1+Q2 compteurs du premier et du deuxième groupe sont obtenus en additionnant les gains de délestage des compteurs dans le sens décroissant jusqu'à atteindre le gain cible. Puis les Q2+Q3 compteurs du deuxième et du troisième groupe sont obtenus en additionnant les gains de délestage des compteurs dans le sens décroissant à partir du début du deuxième groupe jusqu'à atteindre le gain cible.

A l'étape 45, la tête de réseau 11 envoie une commande de délestage aux compteurs sélectionnés pour au moins une occurrence future de la plage de temps considérée (par exemple le jour J d'une ou plusieurs semaines suivantes). En reprenant l'exemple de la FIG.2, et en faisant l'hypothèse que les compteurs sélectionnés à l'étape 44 sont les compteurs des clients C₂₁ et C₂₂, la commande envoyée au compteur du client C₂₁ spécifie deux périodes de délestage D₁ et D₂ et la commande envoyée au compteur du client C₂₂ spécifie une période de délestage D₂.

Dans un premier mode de réalisation la commande de délestage comporte une indication de début T_{d} et une indication de fin T_{f} (ou alternativement une indication de durée) pour chaque période de délestage de la plage de temps déterminée. Cette commande est par exemple transmise dans une trame de données DLMS/COSEM sous forme d'un objet COSEM avec un code OBIS de délestage, c'est-à-dire un objet « Limiter » avec le code OBIS indiqué dans le tableau ci-dessous :

| Objet | IC | OBIS code | | | | | |
|---|---|---|---|---|---|---|---|
| | | A | B | C | D | E | F |
| Limiter | 71, limiter | 0 | b | 17 | 0 | e | 255 |

La trame de données comporte un champ contenant les données utiles (payload en anglais). Ce champ comporte par exemple:
- un octet pour indiquer le nombre de périodes de délestage applicables au compteur auquel la commande est destinée ;
- pour chaque période de délestage, un octet pour indiquer l'heure et un octet pour indiquer la minute du début du délestage ; et un octet pour indiquer l'heure et un octet pour indiquer la minute de la fin du délestage.

Avantageusement, on s'assure que tous les compteurs concernés par une même période de délestage ne commencent pas le délestage exactement en même temps et n'arrêtent pas leur délestage exactement en même temps. Cela engendrerait en effet des changements de charge néfastes pour l'équilibre du réseau de distribution.

Dans un premier exemple, les commandes envoyées aux différents compteurs contiennent des indications de début T_{d} pour une même période de délestage décalées dans le temps l'une par rapport à l'autre. Par exemple le compteur du client C₂₁ reçoit une commande de début de délestage avec une indication de début à 16h00 et une indication de fin à 20h00 pour la période P₂. Et le compteur du client C₂₂ reçoit une commande de début de délestage avec une indication de début à 16h01 décalée d'une minute dans le temps pour la même période P₂. Dans le cas où la commande contient une indication de fin, celle-ci est décalée de la même durée (donc dans cet exemple l'indication de fin est égale à 20h01 pour le compteur du client C₂₂).

Dans un autre exemple, les indications de début et de fin T_{d} et T_{f} sont les mêmes pour tous les compteurs sélectionnés. Et chaque compteur fait commencer et arrêter le délestage selon une variable aléatoire gérée par le compteur qui implique un début et une fin à un instant aléatoire compris dans un intervalle autour des indications de début T_{d} et de fin T_{f} respectivement. Par exemple chaque compteur débute le délestage aléatoirement dans l'intervalle [T_{d} - 2'30" ; T_{d} + 2'30"] et l'arrête aléatoirement dans l'intervalle [T_{f} - 2'30" ; T_{f} + 2'30"].

Dans un autre mode de réalisation, la commande de délestage envoyée à l'étape 45 comporte une indication d'un nombre de périodes de délestage pour la plage de temps concernée ainsi qu'un identifiant de chacune des périodes de délestage. Par exemple si la plage de temps correspond à une journée, et que les périodes de délestage sont fixées à 15mn, il y a 96 périodes de délestage possible sur la journée. La commande indiquera combien de période de délestage sont prévues pour le destinataire de la commande, ainsi que les identifiants des périodes devant faire l'objet d'un délestage parmi les 96 possibilités. Dans ce mode de réalisation, avantageusement, chaque compteur fait commencer et arrêter le délestage selon une variable aléatoire gérée par le compteur qui implique un début et une fin à un instant aléatoire par rapport au début et à la fin de la période de délestage.

Dans les exemples qui viennent d'être décrits, la commande est binaire. En effet elle indique seulement s'il faut ou non délester. Alternativement, la commande peut indiquer un ou plusieurs niveaux de délestage applicables à l'intégralité de la commande ou à chaque période de délestage. Par exemple, dans le cas de la distribution d'eau, la commande de délestage peut aussi indiquer le débit maximum réduit ou le pourcentage de réduction du débit maximum. Dans le cas d'un réseau d'électricité, et dans l'hypothèse d'installations client avec plusieurs circuits de délestage, la commande peut aussi indiquer divers niveaux de délestage.

Dans le mode de réalisation avec phase d'apprentissage, de préférence, les périodes de délestage sont calées sur les tranches de temps utilisées pendant la phase d'apprentissage. Le plus simple est d'utiliser des tranches de temps d'apprentissage et des périodes de délestage qui ont la même durée (par exemple 15mn). Il est aussi possible d'utiliser des périodes de délestage dont la durée est un multiple des tranches de temps d'apprentissage. Ainsi, les périodes de surconsommation P1 et P2 représentées sur les figures FIG.2 et FIG.3 correspondent à une ou plusieurs périodes de délestage Di. Sur la FIG.2, on a fait figurer, à titre d'exemple, deux périodes de délestage correspondant à deux tranches de temps d'apprentissage : une période de délestage Di=A qui fait partie de la première période de surconsommation P1 et qui est comprise entre 9h30 et 9h45, et une période de délestage Di=B qui fait partie de la seconde période de surconsommation P2 et qui est comprise entre 17h30 et 17h45 (avec 0< A < B ≤ 96). On observe sur la FIG.2 que pendant la période de délestage Di=A, seul le client C21 est éligible au délestage. Et pendant la période de délestage Di=B, les clients C21 et C22 sont tous les deux éligibles.

Par exemple, pour la détermination de la consommation prévisionnelle globale et pour la détermination des clients éligibles au délestage, seules sont prises en compte les informations représentatives de la consommation du client en mode hors délestage. Par exemple si le client a fait l'objet d'un délestage le jour J de la semaine en cours, la tête de réseau 11 utilise pour ce client les informations du dernier jour J qui n'a pas fait l'objet d'un délestage pour ce client (au lieu d'utiliser les informations transmises pour le jour J de la semaine en cours).

La FIG.6 est un organigramme représentant les principales étapes d'une méthode de délestage destinée à être mise en oeuvre par un compteur du réseau de distribution. A l'étape 60, le compteur reçoit la commande qui a été transmise par la tête de réseau à l'étape 45. A l'étape 61, le compteur lit le contenu de la commande et programme un ou plusieurs délestages à partir des indications de début et de fin de délestage contenues dans la commande.

Dans un mode de réalisation, le compteur programme le ou les délestages de sorte qu'ils soient déclenchés et/ou arrêtés selon une variable aléatoire gérée par le compteur qui implique un début et une fin de délestage à un instant aléatoire par rapport au début et à la fin de la période de délestage spécifiée dans la commande de délestage.

La tête de réseau 11 et les compteurs 13 peuvent par exemple être implémentés sous la forme d'un dispositif tel que décrit sur la figure FIG.7. Ce dispositif référencé 100 comprend une carte de circuit imprimé 101 sur laquelle un bus de communication 102 relie un processeur 103, une mémoire vive 104, un support de stockage 111, éventuellement une interface 105 pour connecter un écran 106, une série de connecteurs 107 pour connecter des dispositifs ou des modules d'interface utilisateur tels qu'une souris ou un trackpad 108 et un clavier 109, une interface de réseau sans fil 110 et/ou une interface de réseau câblé 112. Selon les fonctionnalités requises, notamment selon que le dispositif 100 est utilisé dans une tête de réseau 11 ou un compteur 13, le dispositif peut ne mettre en oeuvre qu'une partie de ce qui précède. Par exemple, un compteur 13 n'est en général pas connecté à une souris, un trackpad ou un clavier, ni à un réseau sans fil ou un réseau câblé, les échanges d'informations avec le compteur se faisant habituellement par courant porteur en ligne. Certains modules de la figure FIG.7 peuvent être internes ou connectés à l'extérieur, auquel cas ils ne font pas nécessairement partie intégrante du dispositif lui-même. Par exemple, l'écran 106 peut être un écran qui n'est connecté au dispositif 100 que dans des circonstances spécifiques, ou le dispositif 100 peut être contrôlé par un autre appareil doté d'un écran, et dans ce cas le dispositif 100 ne comporte aucun écran 106 ni aucune interface 105.

La mémoire 111 contient un ou plusieurs codes logiciels qui, lorsqu'ils sont exécutés par le processeur 103, permettent à la tête de réseau 11 d'exécuter la méthode de gestion de délestage décrite ici. Dans un mode de réalisation donné à titre d'exemple, un support de stockage amovible 113, tel qu'une clé USB, peut également être connecté. Par exemple, le support de stockage détachable 113 peut contenir les codes logiciels à télécharger dans la mémoire 111.

Le processeur 103 peut être n'importe quel type de processeur tel qu'une unité centrale de traitement ("CPU") ou un microprocesseur dédié tel qu'un microcontrôleur intégré ou un processeur de signal numérique ("DSP").

Le dispositif 100 peut également comprendre d'autres composants que l'on trouve généralement dans les systèmes informatiques, tels qu'un système d'exploitation, des gestionnaires de file d'attente, des pilotes de périphériques ou un ou plusieurs protocoles de réseau qui sont stockés dans la mémoire 111 et exécutés par le processeur 103.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en oeuvre dans du matériel, des logiciels, des microprogrammes, des intergiciels, des microcodes ou toute combinaison appropriée de ceux-ci. S'ils sont mis en oeuvre dans un logiciel, les fonctions ou blocs des schémas fonctionnels et des organigrammes peuvent être mis en oeuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable créent les moyens de mettre en œuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Méthode de gestion de délestage dans un réseau de distribution d'une ressource, le réseau comportant au moins une tête de réseau et une pluralité de compteurs configurés pour:
- mesurer une consommation de ladite ressource par un client,
- transmettre à la tête de réseau des informations représentatives de la consommation du client,
- recevoir une commande de délestage en provenance de la tête de réseau et appliquer un délestage en fonction de ladite commande,
**caractérisée en ce qu'**elle comporte des étapes pour :
- déterminer, à partir des informations représentatives de la consommation des clients, une consommation prévisionnelle globale sur une plage de temps pour l'ensemble des compteurs,
- déterminer une ou plusieurs périodes de délestage pour ladite plage de temps, en comparant la consommation prévisionnelle globale à un seuil global prédéfini,
- estimer un gain de délestage pour au moins une partie des compteurs,
- sélectionner un ou plusieurs compteurs à délester pour obtenir un gain cible permettant de compenser un écart entre un maximum de la consommation prévisionnelle globale sur la période de délestage et le seuil global prédéfini, en tenant compte des gains de délestage estimés,
- envoyer une commande de délestage aux compteurs sélectionnés, ladite commande concernant une ou plusieurs occurrences futures de ladite plage de temps et spécifiant une ou plusieurs périodes de délestage pour ladite plage de temps.

2. Méthode de gestion de délestage selon la revendication 1, **caractérisée en ce que** le gain de délestage est estimé pour les compteurs pour lesquels la consommation client est supérieure à un seuil de consommation ou pour un pourcentage de compteurs pour lesquels la consommation client est la plus forte.

3. Méthode de gestion de délestage selon l'une quelconque des revendications 1 ou 2, **caractérisée en ce que** le gain de délestage d'un compteur donné est estimé en comparant des informations représentatives de la consommation du client sans délestage à des informations, apprises pendant une phase d'apprentissage, représentatives de la consommation du client avec délestage.

4. Méthode de gestion de délestage selon la revendication 3, **caractérisé en ce que** durant la phase d'apprentissage, pour chaque plage de temps considérée, une commande de délestage est envoyée à chaque compteur par tranches de temps, afin d'obtenir des informations représentatives de la consommation du client avec délestage, pour chaque tranche de temps de chaque plage de temps, les périodes de délestage étant calées sur lesdites tranches de temps.

5. Méthode de gestion de délestage selon la revendication 1, **caractérisée en ce que** le délestage consiste à interrompre totalement la distribution de la ressource au niveau d'un ou plusieurs compteurs, et que le gain de délestage estimé pour un compteur donné est égal à la consommation du client sans délestage.

6. Méthode de gestion de délestage selon l'une quelconque des revendications 1 ou 2, **caractérisée en ce que** le délestage consiste à appliquer un débit maximum réduit au niveau d'un ou plusieurs compteurs et, pour un compteur donné, le gain de délestage estimé est égal à la différence entre la consommation du client sans délestage et la consommation possible avec le débit maximum réduit.

7. Méthode de gestion de délestage selon l'une quelconque des revendications 1 ou 2, **caractérisée en ce que** la sélection des compteurs à délester comporte une sélection aléatoire parmi les compteurs pour lesquels le gain de délestage a été estimé, d'un nombre de compteurs nécessaire pour obtenir le gain cible.

8. Méthode de gestion de délestage selon l'une quelconque des revendications 1 ou 2, **caractérisée en ce que** la sélection des compteurs à délester comporte :
- une première sélection d'un premier nombre de compteurs supérieur au nombre de compteurs nécessaire pour obtenir le gain cible, et
- une seconde sélection aléatoire parmi les compteurs de la première sélection, d'un deuxième nombre de compteurs, inférieur au premier nombre, nécessaire pour obtenir le gain cible.

9. Méthode de gestion de délestage selon l'une quelconque des revendications 1 ou 2, **caractérisée en ce que** la sélection des compteurs à délester comporte :
- une première sélection parmi les compteurs pris par ordre de gain de délestage décroissant, d'un premier, second, et troisième groupe comportant respectivement Q1, Q2 et Q3 compteurs, la somme des gains de délestage des Q1+Q2 compteurs du premier et du second groupe permettant d'atteindre le gain cible, et la somme des gains de délestage des Q2+Q3 compteurs du second et du troisième groupe permettant d'atteindre le gain cible,
- une seconde sélection aléatoire parmi les Q1+Q2+Q3 compteurs de Q2+Q3 compteurs à délester.

10. Méthode de gestion de délestage selon l'une quelconque des revendications 1 à 9, **caractérisée en ce que** la commande de délestage comporte un nombre de périodes de délestage pour ladite plage de temps et un identifiant de chaque période de délestage.

11. Méthode de gestion de délestage selon la revendication 4, **caractérisée en ce que** la commande de délestage comporte un nombre de périodes de délestage pour ladite plage de temps, un identifiant de chaque période de délestage, et une indication de la réduction de débit à appliquer.

12. Méthode de gestion de délestage selon l'une quelconque des revendications 1 à 11, **caractérisée en ce que** seules sont prise en compte, pour la détermination de la consommation prévisionnelle globale, les informations représentatives de la consommation du client sans délestage.

13. Dispositif tête de réseau comportant des moyens pour la mise en oeuvre d'une méthode de gestion de délestage dans un réseau de distribution selon l'une quelconque des revendication 1 à 12.

14. Méthode de délestage par un compteur appartenant à un réseau de distribution d'une ressource, le compteur étant configuré pour mesurer une consommation de ladite ressource par un client et pour transmettre à une tête de réseau du réseau de distribution des informations client représentatives de la consommation du client sur une plage de temps déterminée, la méthode comportant une étape de réception d'une commande de délestage provenant de la tête de réseau, la commande de délestage spécifiant une ou plusieurs périodes de délestage à mettre en oeuvre pendant une ou plusieurs occurrences futures de la plage de temps déterminée.

15. Méthode de délestage selon la revendication 14, **caractérisée en ce que** la commande de délestage comporte un nombre de périodes de délestage pour ladite plage de temps et un identifiant de chaque période de délestage.

16. Méthode de délestage selon la revendication 15, **caractérisée en ce que** la commande de délestage comporte en outre une indication de réduction de débit à appliquer au niveau du compteur.

17. Méthode de délestage selon l'une quelconque des revendications 14 ou 16, caractérisée le délestage est déclenché et/ou terminé à un instant aléatoire par rapport aux périodes de délestage spécifiées dans la commande de délestage.

18. Dispositif compteur comportant des moyens de mise en oeuvre d'une méthode de délestage selon l'une quelconque des revendications 14 à 17.

19. Produit programme d'ordinateur comportant des instructions qui lorsqu'elles sont exécutées par au moins un processeur causent la mise en oeuvre d'une méthode de gestion de délestage selon l'une quelconque des revendications 1 à 12.

20. Produit programme d'ordinateur comportant des instructions qui lorsqu'elles sont exécutées par au moins un processeur causent la mise en oeuvre d'une méthode de délestage selon l'une quelconque des revendications 14 à 17.

21. Support de stockage non transitoire lisible par un ordinateur comportant des instructions qui lorsqu'elles sont exécutées par un processeur causent la mise en oeuvre d'une méthode de gestion de délestage selon l'une quelconque des revendications 1 à 12

22. Support de stockage non transitoire lisible par un ordinateur comportant des instructions qui lorsqu'elles sont exécutées par un processeur causent la mise en oeuvre d'une méthode de délestage selon l'une quelconque des revendications 14 à 17.

23. Système de gestion de compteurs d'un réseau de distribution d'une ressource comportant au moins un dispositif tête de réseau selon la revendication 13, et au moins un dispositif compteur selon la revendication 18.
